(19) Europäisches Patentamt
European Patent Office
Office européen des brevets

(11) **EP 3 859 399 A1**

(12) **EUROPEAN PATENT APPLICATION**

(43) Date of publication:
**04.08.2021 Bulletin 2021/31**

(51) Int Cl.:
***G01S 19/53*** (2010.01)    *G01C 21/16* (2006.01)
*G01C 21/28* (2006.01)

(21) Application number: **21150467.5**

(22) Date of filing: **07.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2020 US 202016751707**

(71) Applicant: **Aptiv Technologies Limited**
**14004 St. Michael (BB)**

(72) Inventors:
• KNUTSON, Eric P.
  **Kokomo, In Indiana 46901 (US)**
• SPELL, David M.
  **Kokomo, IN Indiana (US)**
• PHAM, Linh
  **Kokomo, In Indiana 46902 (US)**

(74) Representative: **Westphal, Mussgnug**
**Patentanwälte & Partner mbB**
**Werinherstraße 79**
**81541 München (DE)**

(54) **VEHICLE HEADING INFORMATION BASED ON SINGLE SATELLITE DETECTION**

(57) An illustrative example embodiment of a system (20) for determining heading direction information includes a plurality of detectors (24,26) in a predetermined detector arrangement. The detectors (24,26) are respectively configured to detect at least one satellite (44). At least one processor (30) is configured to determine a spatial relationship between at least one characteristic of the detector arrangement and a single satellite (44) detected by each of the detectors (24,26). The processor (30) determines the spatial relationship at each of a plurality of times when each of the detectors (24,26) detects the single satellite (44). The processor (30) is configured to determine heading direction information based on a difference between the determined spatial relationships.

FIG. 3

**Description**

BACKGROUND

Modern automotive vehicles include an increasing amount of electronic technology, such as sensors or detectors that provide driver assistance or autonomous vehicle control. Information regarding the movement or heading direction of the vehicle is useful or necessary for such assistance or control. There are various ways to obtain such information. For example GNSS satellite technology allows for determining and tracking vehicle movement or direction information based on detecting multiple satellites and using known algorithms. There are circumstances, however, in which the number of satellites that can be detected is not enough to provide the desired information.
One approach at obtaining direction or movement information in the absence of sufficient GNSS satellite detection includes using a dead reckoning technique based on an inertial measurement unit (IMU). Gyroscopes and accelerometers are example components of IMUs useful for dead reckoning. One shortcoming of known IMUs is that the accuracy is limited and, therefore, dead reckoning is typically only used in certain circumstances and for limited purposes. One attempt at alleviating this issue is to utilize more expensive IMUs, however, even those have accuracy limitations and the additional cost often makes them an impractical or unattractive option.

SUMMARY

An illustrative example embodiment of a system for determining heading direction information includes a plurality of detectors in a predetermined detector arrangement. The detectors are respectively configured to detect at least one satellite. At least one processor is configured to determine a spatial relationship between at least one characteristic of the detector arrangement and a single satellite detected by each of the detectors. The processor determines the spatial relationship for each of a plurality of times when the detectors detect the single satellite. The processor is configured to determine heading direction information based on a difference between the determined spatial relationships.
In an example embodiment having one or more features of the system of the previous paragraph, the detector arrangement includes an alignment of the detectors and the at least one characteristic is the alignment of the detectors.
In an example embodiment having one or more features of the system of any of the previous paragraphs, the alignment comprises a straight line and a fixed distance between the detectors, the determined spatial relationship comprises an angle of orientation of the straight line, and the heading direction information corresponds to the angle of orientation of the straight line.
In an example embodiment having one or more features of the system of any of the previous paragraphs, the at least one processor is configured to determine: the angle of orientation of a first one of the spatial relationships at a first time when the single satellite is in a first known position, the angle of orientation of a second one of the spatial relationships at a second time when the single satellite is in a second known position, and a difference between the angles of orientation at the first and second times.
In an example embodiment having one or more features of the system of any of the previous paragraphs, the at least one processor is configured to: determine a movement of the single satellite between the first known position and the second known position and determine the heading direction information based on the determined movement and the determined difference between the angles of orientation.
An example embodiment having one or more features of the system of any of the previous paragraphs includes an inertial measurement unit (IMU) that provides an indication of a heading direction and wherein the at least one processor uses the determined heading direction information and the indication of the heading direction provided by the inertial measurement device to determine a heading direction of a vehicle associated with the detectors.
In an example embodiment having one or more features of the system of any of the previous paragraphs, the IMU includes a gyroscope.
In an example embodiment having one or more features of the system of any of the previous paragraphs, the indication of the heading direction includes a drift associated with the IMU and the at least one processor uses the heading direction information to compensate for or correct the drift.
In an example embodiment having one or more features of the system of any of the previous paragraphs, the at least one processor weights one of the indication of the heading direction and the determined heading direction information more significantly than the other based on an amount of time that the at least one processor has been utilizing the indication of the heading direction from the IMU.
In an example embodiment having one or more features of the system of any of the previous paragraphs, the at least one processor is configured to perform dead reckoning based on the heading direction information.
An illustrative example embodiment of a method of determining heading direction information includes: detecting a single satellite at a first time by each of a plurality of detectors that are in a predetermined detector arrangement; determining a first spatial relationship between at least one characteristic of the detector arrangement and the single satellite based on the detecting at the first time; detecting the single satellite at a second time by each of a plurality of detectors; determining a second spatial relationship between the at least one characteristic of the detector arrangement and the single satellite based on the detecting at the second time; determining a difference between the determined first and second spatial relationships; and determining heading direction information based on the determined difference.

In an example embodiment having one or more features of the method of the previous paragraph, the detector arrangement includes an alignment of the detectors and the at least one characteristic is the alignment of the detectors.

In an example embodiment having one or more features of the method of any of the previous paragraphs, the alignment comprises a straight line and a fixed distance between the detectors; determining the first and second spatial relationships comprises determining respective angles of orientation of the straight line; and determining the heading direction information comprises determining a difference between the determined angles of orientation.

In an example embodiment having one or more features of the method of any of the previous paragraphs, the single satellite is in a first known position at the first time; the single satellite is in a second known position at the second time; the second known position is different than the first known position; and the method comprises determining a movement of the single satellite between the first known position and the second known position, and determining the heading direction information based on the determined movement and the determined difference between the determined angles of orientation.

An example embodiment having one or more features of the method of any of the previous paragraphs includes obtaining an indication of a heading direction from an inertial measurement unit (IMU) and determining a heading direction of a vehicle associated with the detectors based upon the determined heading direction information and the obtained indication of the heading direction.

In an example embodiment having one or more features of the method of any of the previous paragraphs, the indication of the heading direction includes a drift associated with the IMU and the method comprises using the heading direction information to compensate for or correct the drift.

An example embodiment having one or more features of the method of any of the previous paragraphs includes performing dead reckoning based on the heading direction information.

An illustrative example embodiment of a system for determining heading direction information includes a plurality of detecting means for respectively detecting at least one satellite, the plurality of detecting means being in a predetermined arrangement and means for determining a first spatial relationship between at least one characteristic of the predetermined arrangement and the single satellite based on the detecting means detecting the single satellite at a first time, determining a second spatial relationship between the at least one characteristic of the predetermined arrangement and the single satellite based on the detecting means detecting the single satellite at a second time, determining a difference between the first and second spatial relationships, and determining heading direction information based on the determined difference.

In an example embodiment having one or more features of the system of the previous paragraph, the at least one characteristic of the predetermined arrangement is an alignment of the detectors, the alignment comprises a straight line and a fixed distance between the detectors, the means for determining the first and second spatial relationships is configured to determine respective angles of orientation of the straight line for the first and second spatial relationships, and the means for determining the heading direction information is configured to determine a difference between the determined angles of orientation.

An example embodiment having one or more features of the system of any of the previous paragraphs includes inertial measurement means for providing an indication of a heading direction, the indication of the heading direction includes a drift, and the means for determining the heading direction information is configured to use the heading direction information to compensate for or correct the drift and to determine a heading direction of a vehicle associated with the system.

The various features and advantages of at least one disclosed example embodiment will become apparent to those skilled in the art from the following detailed description. The drawings that accompany the detailed description can be briefly described as follows.

BRIEF DESCRIPTION OF THE DRAWINGS

Figure 1 schematically illustrates a vehicle including an example system for determining heading direction information.

Figure 2 is a flow chart diagram summarizing an example method of determining heading direction information.

Figure 3 schematically illustrates determinations made in an example embodiment.

DETAILED DESCRIPTION

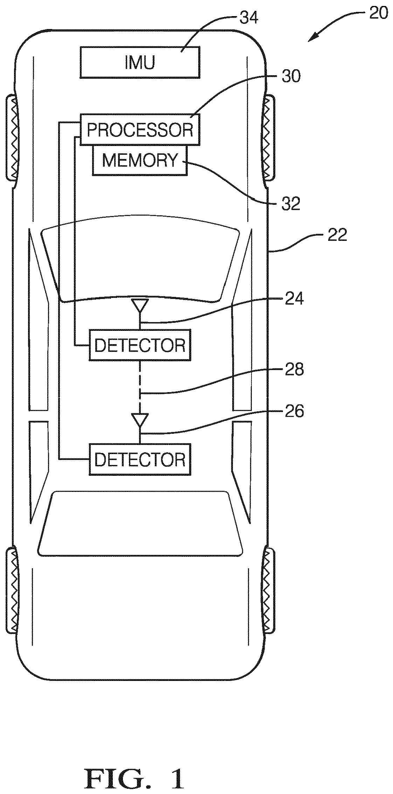

Figure 1 schematically illustrates a system 20 for determining heading direction information. In Figure 1, the system 20 is associated with a vehicle 22 and provides information regarding a heading direction of the vehicle 22.

The illustrated system 20 includes a plurality of detectors 24 and 26 that are each configured for detecting at least one satellite. In some embodiments, the detectors 24, 26 are useful for a variety of navigation features when sufficient satellites can be detected. For example, GNSS satellites can be used for determining the location and direction of the vehicle 22 for navigation purposes. The system 20 is also configured to provide heading direction information under circumstances where limited satellite detection is possible and dead reckoning navigation techniques are used.

The detectors 24 and 26 are situated in a predetermined detector arrangement. In the illustrated example, the detector arrangement includes an alignment of the detectors 24 and 26 on a straight line 28. The detector arrangement is situated relative to the vehicle 22 in a manner that is useful for providing heading direction information regarding a heading direction of the vehicle 22. For example, the detector arrangement has an associated frame of reference that has a known or determined relationship to a frame of reference of the vehicle 22.

The system 20 includes a processor 30 that has associated memory 32. The processor 30 is configured or suitably programmed to utilize information from the detectors 24, 26 to determine heading direction information. The processor 30 in some embodiments is a dedicated computing device while in other embodiments the processor 30 is a device that performs a variety of computing functions on board the vehicle 22 including those mentioned in this description.

The system 20 includes an inertial measurement unit (IMU) 34, which may include accelerometers and a gyroscope that provides an indication of a heading direction of the vehicle 22. The processor 30 is configured to use the indication from the IMU 34 during dead reckoning navigation, for example. The indication of the heading direction provided by the IMU 34 may include drift over time because of the performance or accuracy limitations of the IMU 34. The processor 30 is configured to determine heading direction information based on the detectors 24, 26 detecting a single satellite. The processor 30 is also configured to use such information to compensate for or correct the drift in the indication provided by the IMU 34.

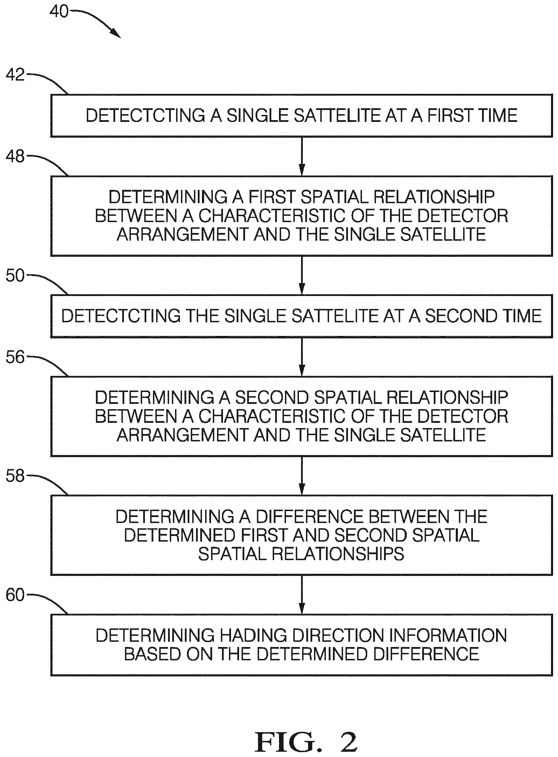

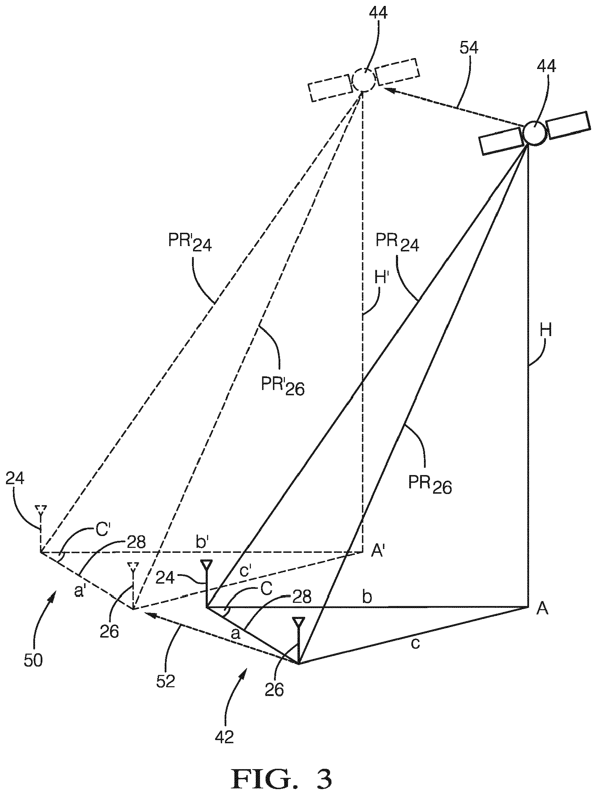

Figures 2 and 3 illustrate an example approach to determining heading direction information and using that information for dead reckoning type navigation or other similar purposes. The flow chart 40 in Figure 2 begins at 42 where the detectors 24, 26 detect a single satellite 44 (Figure 3) at a first time. As shown in Figure 3, the detectors 24 and 26 each detect the single satellite 44 that is situated a height H above a location A within a plane of the detectors 24, 26. Within that plane, the straight line 28 of the alignment between the detectors 24 and 26 corresponds to one side of a triangle that is opposite the position A. That side of the triangle corresponding to the straight line 28 is labeled "a" in Figure 3. The other sides of that triangle are labeled "b" and "c," respectively.

At 48 in Figure 2, the processor 30 determines a first spatial relationship between at least one characteristic of the detector arrangement and the single satellite 44. That spatial relationship is based upon an indication from the detector 24 of a pseudo range $PR_{24}$ corresponding to a distance between the detector 24 and the satellite 42, a pseudo range $PR_{26}$ indication from the detector 26, the known distance along the line 28 between the detectors 24 and 26 and the height H of the single satellite 44. The processor 30 has access to information stored in the memory 32, for example, regarding the position of the satellite 44 at the first time when the detectors 24 and 26 detect the single satellite 44 at the first time as shown at 42. There is a known GNSS database that contains an almanac with information regarding the paths of known satellites. In the illustrated example, the processor 30 uses such almanac information for determining or knowing the location of the single satellite 44 at the first time.

In the circumstances represented in Figures 2 and 3, the detectors 24 and 26 are unable to detect a sufficient number of satellites to use that information for navigation or location purposes. The processor 30 determines navigation or location information, such as a heading direction of the vehicle 22, based on information from the detectors 24 and 26 regarding a single satellite detected by those detectors at each of a plurality of times, an indication from the IMU 34, or a combination of those.

Given that the height H is known based on available information regarding the single satellite 44 and the distance between the detectors 24 and 26 along the line 28 is known because of the predetermined arrangement of the detectors, the processor 30 utilizes the pseudo ranges $PR_{24}$ and $PR_{26}$ and those known distances to determine a first spatial relationship between at least one characteristic of the detector arrangement and the single satellite 44 as shown at 48 in Figure 2. In this example, the characteristic of the detector arrangement is an orientation of the line 28 between the detectors 24 and 26 relative to the position of the single satellite 44. That orientation corresponds to an angle C opposite the side c of the triangle in the detector reference plane schematically represented in Figure 3 at the first time shown at 42.

The processor 30 is configured to utilize known techniques for converting the earth centered earth frame (ECEF) position of the satellite 44 into the vehicle frame of reference corresponding to the detector plane represented in Figure 3. Those skilled in the art who have the benefit of this description will be able to select an appropriate conversion technique to translate between those frames of reference based upon that which is known in the art. The processor 30 is configured to determine the orientation of the line 28 of the detector arrangement utilizing the law of cosines to

4

determine the angle C. That angle can be determined using the following Equation (1):

$$C = cos^{-1}\left(\frac{\sqrt{PR_{24}{}^2 + H^2} - \sqrt{PR_{26}{}^2 + H^2} - distance\ a}{-2\left(\sqrt{PR_{24}{}^2 + H^2} * distance\ a\right)}\right)$$

where the pseudo ranges $PR_{24}$ and $PR_{26}$ are the pseudo ranges represented in Figure 3 between the respective detectors and the single satellite 44, the height H is the height of the single satellite 44 and the *distance a* is the known distance between the detectors 24 and 26 along the line 28.

Equation (1) is obtained from the law of cosines, which is

$$c = a + b - 2ab * Cos(C)$$

Rearranging terms to solve for the angle C yields

$$C = cos^{-1}\left(\frac{c - a - b}{-2ab}\right)$$

The triangles and notation shown in Figure 2 and the Pythagorean theorem allow for defining the sides c and b in terms of the pseudo ranges detected by the detectors 24 and 26 so that the angle C can be determined based on the detectors 24 and 26 detecting the single satellite 44. The side $b = \sqrt{PR_{24}{}^2 + H^2}$ and the side c = $\sqrt{PR_{26}{}^2 + H^2}$. Substituting in those terms and "*distance a*" for the known distance between the detectors 24 and 26 along the line 28 results in Equation (1) above. The processor 30 determines a value for the angle C, which represents or corresponds to an orientation of the line 28 between the detectors 24 and 26 relative to the known position of the single satellite 44 at the first time.

As shown in Figure 2, the detectors 24 and 26 detect the single satellite 44 at a second time at 50. The vehicle 22 and, therefore, the detectors 24 and 26 are in motion as schematically represented by the arrow 52. At the same time, the satellite 44 is in motion as schematically represented by the arrow 54. It follows that the detectors 24 and 26 and the satellite 44 will be in different positions at the second time represented at 50 compared to the first time represented at 42. The processor 30 determines a second spatial relationship between the characteristic of the detector arrangement and the single satellite 44 at 56. In this example, the second spatial relationship includes an orientation of the line 28 relative to the position A', which can be represented by the angle C'. That angle is also determined by the processor 30 using the following Equation (2), which is also based on the law of cosines.

$$C' = cos^{-1}\left(\frac{\sqrt{PR_{24}{}'^2 + H'^2} - \sqrt{PR_{26}{}'^2 + H'^2} - distance\ a}{-2\left(\sqrt{PR_{24}{}'^2 + H'^2} * distance\ a\right)}\right)$$

At 58 the processor 30 determines a difference between the first and second spatial relationships, which in this example corresponds to a difference between the angles C and C'. Any change in the determined angles or orientations of the line 28 represents or corresponds to a change in the heading direction of the vehicle 22 between the first and second times at which the single satellite 44 was detected by each of the detectors 24 and 26. At 60, the processor 30 determines heading direction information based on that determined difference.

In some embodiments the processor 30 uses the heading direction information determined based on the indications from the detectors 24 and 26 for dead reckoning navigation purposes, such as using the heading direction information as the heading of the vehicle 22 without relying on other input. The processor 30 in some embodiments uses such dead reckoning when the detectors 24 and 26 are unable to detect a sufficient number of satellites to use other location or navigation algorithms. When at least one satellite is detected by both detectors, the processor 30 may use information and determinations as described above to determine the heading of the vehicle 22.

In other embodiments, the processor 30 uses the determined heading direction information during a dead reckoning mode to compensate for or correct any drift in an indication of heading direction provided by the IMU 34. As known, gyroscopes and other IMUs typically have drift that affects the accuracy of an indication of heading direction from the IMU. The processor 30 utilizes the determined heading direction information based on the detectors 24 and 26 detecting the satellite 44 at each of a plurality of times to compensate for or correct such drift.

For example, the processor 30 is configured to compare a change in heading direction from the determined heading direction information to a change in the indication of heading direction from the IMU 34. If there is a difference between those changes, that indicates some drift in the indication from the IMU 34. The processor 30 is configured to compensate for or correct such drift, which improves dead reckoning based on information from the IMU 34.

When determining the heading direction information at 60, the processor 30 in the illustrated embodiment is configured to take into account the change in position of the satellite 44 between the first and second times. The GNSS almanac data within the memory 32 includes information regarding a change in at least one of the position or heading of the satellite 44 and the processor 30 subtracts the change in heading of the satellite 44 from the difference between the angles C and C' as part of determining the heading direction information at 60.

In some embodiments, the processor 30 utilizes information from other sensors on board the vehicle 22 (not illustrated) to monitor the pitch and roll of the vehicle 22. If the pitch or roll of the vehicle 22 is outside of an acceptable range, then the processor 30 will not perform the method summarized in the flow chart 40 of Figure 2. This feature protects against obtaining faulty or unreliable information from the detectors 24 and 26 because of the inclination or orientation of the vehicle 22 on a road surface, for example.

In some example embodiments, the processor 30 is configured to repeatedly perform the method summarized in Figure 40 during a dead reckoning navigation mode to repeatedly or iteratively compensate for or correct any drift associated with the indication of heading direction provided by the IMU 34.

In an example embodiment, the processor 30 is configured to weight the determined heading direction information based upon the detectors 24 and 26 detecting the satellite 44 and the indication of heading direction from the IMU 34 depending on current circumstances. For example, when the IMU 34 is expected to have increasing amounts of drift overtime, the processor 30 applies more significance or a higher weighting to the determined heading direction information based upon the output of the detectors 24 and 26 than the indication of heading direction from the IMU 34. On the other hand, near the beginning of a dead reckoning mode of operation when the IMU 34 is expected to be more accurate, the processor 30 applies a more significant weighting to the indication from the IMU 34 than that which is available through the detectors 24 and 26. Other circumstances are used in some embodiments by the processor 30 to apply an appropriate weighting that takes into account the expected accuracy or reliability of the different sources of information regarding the heading direction of the vehicle 22.

The disclosed example embodiment allows for dead reckoning navigation based upon a plurality of detectors in a known detector arrangement detecting a single satellite at each of a plurality of times. The information from those detectors is used in some embodiments to determine the heading direction of an associated vehicle and in other embodiments to compensate for or correct any drift in the indication of heading direction provided by an IMU on board the vehicle.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

**Claims**

**1.** A system (20) for determining heading direction information, the system (20) comprising:

a plurality of detectors (24,26) in a predetermined detector arrangement, the plurality of detectors (24,26) being respectively configured to detect at least one satellite (44); and
at least one processor (30) configured to determine a spatial relationship between at least one characteristic of the detector arrangement and a single satellite (44) detected by each of the detectors (24,26), the at least one processor (30) is configured to determine the spatial relationship at each of a plurality of times when the detectors (24,26) detect the single satellite (44), the at least one processor (30) is configured to determine heading direction information based on a difference between the determined spatial relationships.

**2.** The system (20) of claim 1, wherein
the detector arrangement includes an alignment of the detectors (24,26); and
the at least one characteristic is the alignment of the detectors (24,26).

**3.** The system (20) of claim 2, wherein
the alignment comprises a straight line (28) and a fixed distance (a) between the detectors (24,26);
the determined spatial relationship comprises an angle of orientation (C) of the straight line (28); and
the heading direction information corresponds to the angle of orientation (C) of the straight line (28).

**4.** The system (20) of claim 3, wherein the at least one processor (30) is configured to determine:

the angle of orientation (C) of a first one of the spatial relationships at a first time when the single satellite (44) is in a first known position;
the angle of orientation (C') of a second one of the spatial relationships at a second time when the single satellite (44) is in a second known position; and
a difference between the angles of orientation (C, C') at the first and second times.

**5.** The system (20) of claim 4, wherein the at least one processor (30) is configured to:

determine a movement of the single satellite (44) between the first known position and the second known position; and
determine the heading direction information based on the determined movement and the determined difference between the angles of orientation (C, C').

**6.** The system (20) of claim 1, comprising an inertial measurement unit (IMU) (34) that provides an indication of a heading direction and wherein the at least one processor (30) uses the determined heading direction information and the indication of the heading direction provided by the IMU (34) to determine a heading direction of a vehicle associated with the detectors (24,26).

**7.** The system (20) of claim 6, wherein
the indication of the heading direction includes a drift associated with the IMU (34); and
the at least one processor (30) uses the heading direction information to compensate for or correct the drift.

**8.** The system (20) of claim 6, wherein the at least one processor (30) weights one of the indication of the heading direction and the determined heading direction information more significantly than the other based on an amount of time that the at least one processor (30) has been utilizing the indication of the heading direction from the IMU (34).

**9.** A method of determining heading direction information, the method comprising:

detecting a single satellite (44) at a first time by each of a plurality of detectors (24,26) that are in a predetermined detector arrangement;
determining a first spatial relationship between at least one characteristic of the detector arrangement and the single satellite (44) based on the detecting at the first time;
detecting the single satellite (44) at a second time by each of a plurality of detectors (24,26);
determining a second spatial relationship between the at least one characteristic of the detector arrangement and the single satellite (44) based on the detecting at the second time;
determining a difference between the determined first and second spatial relationships; and
determining heading direction information based on the determined difference.

**10.** The method of claim 9, wherein
the detector arrangement includes an alignment of the detectors (24,26); and
the at least one characteristic is the alignment of the detectors (24,26).

**11.** The method of claim 10, wherein
the alignment comprises a straight line (28) and a fixed distance between the detectors (24,26);
determining the first and second spatial relationships comprises determining respective angles of orientation (C, C') of the straight line; and
determining the heading direction information comprises determining a difference between the determined angles of orientation (C, C').

12. The method of claim 11, wherein
the single satellite (44) is in a first known position at the first time;
the single satellite (44) is in a second known position at the second time;
the second known position is different than the first known position; and
the method comprises

determining a movement of the single satellite (44) between the first known position and the second known position; and
determining the heading direction information based on the determined movement and the determined difference between the determined angles of orientation (C, C').

13. The method of claim 11, comprising
obtaining an indication of a heading direction from an inertial measurement unit (IMU) (34), wherein the indication of the heading direction includes a drift associated with the IMU (34); and
using the heading direction information to compensate for or correct the drift.

14. The method of claim 9, comprising performing dead reckoning based on the heading direction information.

15. A system (20) for determining heading direction information, the system (20) comprising:

a plurality of detecting means (24,26) for respectively detecting at least one satellite (44), the plurality of detecting means being in a predetermined arrangement; and
means for

determining a first spatial relationship between at least one characteristic of the predetermined arrangement and the single satellite (44) based on the detecting means (24,26) detecting the single satellite (44) at a first time;
determining a second spatial relationship between the at least one characteristic of the predetermined arrangement and the single satellite (44) based on the detecting means (24,26) detecting the single satellite (44) at a second time;
determining a difference between the first and second spatial relationships; and
determining heading direction information based on the determined difference.

FIG. 1

40

42
DETECTCTING A SINGLE SATTELITE AT A FIRST TIME

48
DETERMINING A FIRST SPATIAL RELATIONSHIP BETWEEN A CHARACTERISTIC OF THE DETECTOR ARRANGEMENT AND THE SINGLE SATELLITE

50
DETECTCTING THE SINGLE SATTELITE AT A SECOND TIME

56
DETERMINING A SECOND SPATIAL RELATIONSHIP BETWEEN A CHARACTERISTIC OF THE DETECTOR ARRANGEMENT AND THE SINGLE SATELLITE

58
DETERMINING A DIFFERENCE BETWEEN THE DETERMINED FIRST AND SECOND SPATIAL SPATIAL RELATIONSHIPS

60
DETERMINING HADING DIRECTION INFORMATION BASED ON THE DETERMINED DIFFERENCE

FIG. 2

FIG. 3

Europäisches
Patentamt
European
Patent Office
Office européen
des brevets

# EUROPEAN SEARCH REPORT

Application Number

EP 21 15 0467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 617 317 A (IGNAGNI MARIO B [US]) 1 April 1997 (1997-04-01) * fig. 3-6; col. 4, l. 44 to col. 15, l. 65 * | 1-15 | INV. G01S19/53 ADD. G01C21/16 G01C21/28 |
| A | US 9 880 562 B2 (AGJUNCTION LLC [US]) 30 January 2018 (2018-01-30) * the whole document * | 1-15 | |
| A | EP 2 966 477 A1 (ANAVS GMBH [DE]) 13 January 2016 (2016-01-13) * the whole document * | 1-15 | |

TECHNICAL FIELDS
SEARCHED      (IPC)

G01S
G01C

The present search report has been drawn up for all claims

| Place of search | Date of completion of the search | Examiner |
|---|---|---|
| Munich | 21 June 2021 | González Moreno, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 0467

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | | Publication date | Patent family member(s) | | Publication date |
|---|---|---|---|---|---|
| US 5617317 | A | 01-04-1997 | NONE | | |
| US 9880562 | B2 | 30-01-2018 | US | 2014324291 A1 | 30-10-2014 |
| | | | US | 2015212522 A1 | 30-07-2015 |
| | | | US | 2016011597 A1 | 14-01-2016 |
| | | | US | 2016252909 A1 | 01-09-2016 |
| | | | US | 2016334804 A1 | 17-11-2016 |
| | | | US | 2018113473 A1 | 26-04-2018 |
| EP 2966477 | A1 | 13-01-2016 | NONE | | |

EPO FORM P0459

For more details about this annex : see Official Journal of the European Patent Office, No. 12/82